# DEMANDE DE BREVET EUROPEEN

(11) **EP 0 588 731 A1**
(43) Date de publication de la demande: **23.03.1994**
(21) Numéro de dépôt: 93402278.1
(22) Date de dépôt: 17.09.1993
(51) Int. Cl.: H04L 12/40

(54) **Procédé pour transmettre des messages, et unité fonctionnelle et installation s'y rapportant**

(30) Priorité: 18.09.1992 FR 9211132
(71) Demandeur: LANDIS & GYR BUILDING CONTROL (FRANCE) Sarl, F-92115 Clichy (FR)
(72) Inventeur: Gilbert, Jérôme, F-92300 Levallois-Perret (FR)
(74) Mandataire: Pontet, Bernard

(57) **Abrégé**

Chaque messages (31) comprend une émission initiale (41) et deux émissions répétitives (51), toutes identiques. L'émission initiale (41) commence après qu'un temps de silence (T_{SM}) ait été détecté sur l'espace de communication.

Le temps de silence (S₁) entre les émissions (41, 51) varie en fonction de l'unité fonctionnelle émettrice. Ainsi, si un autre message (32) commence une émission (42) au même instant (t₁) que l'émission (41) du premier message (31), la collision qui en résulte ne concerne que l'émission initiale car lors de l'émission répétitive, l'unité fonctionnelle devant détecter le temps de silence le plus long (S₂) détecte l'activité résultant de l'émission répétitive (51) de l'autre unité avant de pouvoir commencer sa propre émission répétitive (52). Ainsi, le message associé aux temps de silence les plus longs est décalé jusqu'à ce que l'autre message soit terminé.

Utilisation pour gérer les collisions de manière fiable, économique, sans perte de temps et sans moyens de centralisation.

## Description

La présente invention concerne un procédé pour transmettre des messages à travers un espace de communication librement accessible à divers émetteurs.

La présente invention concerne également une unité fonctionnelle pour la mise en oeuvre de ce procédé.

La présente invention concerne encore une installation comportant plusieurs telles unités fonctionnelles.

L'invention s'applique notamment aux installations domestiques et aux installations en locaux professionnels.

Dans de telles installations, on sait organiser les unités fonctionnelles en les reliant entre elles par un espace de communication de manière à permettre à l'utilisateur un pilotage plus perfectionné, plus automatique ou plus commode.

L'invention est mise en oeuvre avec des unités fonctionnelles, par exemple des appareils ou des fonctions d'appareils, qui ont la possibilité de communiquer de manière bidirectionnelle. Le ou les supports de transmission utilisés pour réaliser l'espace de communication bidirectionnelle peuvent être les courants porteurs, un câble, des moyens optiques ou radio électriques, etc ... Les unités fonctionnelles peuvent être non seulement des appareils, mais aussi des fonctions ou ressources d'appareil, ou encore un organe assurant une fonction de relais vers un appareil éloigné du local.

Dans une telle installation, les messages échangés à travers l'espace de communication peuvent être nombreux et il y a donc un risque de collisions de messages, c'est à dire le risque que deux messages sensiblement simultanés interfèrent l'un avec l'autre et ne puissent donc pas être compris par les unités fonctionnelles destinataires.

On connaît des procédés coûteux pour détecter de telles collisions et provoquer une réémission des messages endommagés.

On connaît encore des procédés consistant à établir des tours de rôle de façon qu'à chaque instant une seule unité fonctionnelle soit autorisée à émettre. Ce procédé est susceptible de retarder des messages urgents tels que les messages initiés par commande humaine.

On connaît également le procédé d'écoute préalable de l'espace, selon lequel un message n'est émis qu'après détection d'un silence d'une durée prédéterminée.

Ce procédé est le moins coûteux, mais il a l'inconvénient de ne pas régler le cas où deux messages démarrent à peu près au même moment.

Il est également connu de transmettre un message par une émission initiale suivie, après un silence, par au moins une émission répétitive avec l'espoir que l'émission répétitive sera transmise sans perturbation au cas où l'émission initiale aurait été perturbée. Mais ce procédé ne règle pas le problème des collisions: si deux émissions initiales commencent en même temps, les deux émissions répétitives risquent également de commencer en même temps après un silence de séparation de message, notamment si les deux messages ont même longueur. Si on voulait introduire une écoute du réseau entre le message initial et le message répétitif, le résultat serait encore pire car cette écoute intermédiaire resynchroniserait les deux messages répétitifs par rapport à la fin du message initial le plus long.

Le but de l'invention est ainsi de proposer un procédé pour transmettre des messages à travers un espace de communication librement accessible, dans lequel les risques de collisions soient sensiblement éliminés sans que le coût de réalisation et/ou les temps de transmission atteignent des valeurs prohibitives.

Suivant l'invention, le procédé pour transmettre des messages à travers un espace de communication pouvant être accessible à divers émetteurs, dans lequel chaque message comprend une émission initiale suivie, après une interruption, par au moins une émission répétitive, est caractérisé en ce que pendant l'interruption on écoute l'espace de communication, en ce qu'on émet le message répétitif si on détecte sur l'espace de communication un temps de silence dont la durée est déterminée en fonction de l'émetteur de l'émission initiale, et en ce qu'on retarde l'émission répétitive si une transmission en provenance d'un autre émetteur est détectée.

Ainsi, on utilise l'interruption, normalement destinée à séparer les deux émissions, pour décaler dans le temps, l'une par rapport à l'autre, les émissions répétitives de deux messages dont les émissions initiales étaient sensiblement simultanées. Comme on fait en sorte que la durée de l'interruption entre les deux émissions soit fonction de l'émetteur de chaque message, on peut faire en sorte que le déphasage introduit par chaque unité fonctionnelle émettrice soit différent de celui qu'introduirait n'importe quelle autre unité fonctionnelle émettrice, du moins dans un réseau déterminé.

En outre, on utilise l'interruption en question pour écouter l'espace de communication et on retarde la suite de la transmission du message si le silence est brisé avant que l'interruption arrive à son terme. Quand deux émissions initiales ont été simultanées, l'émission répétitive du message comportant l'interruption la plus brève commence la première, et sera détectée par l'autre émetteur qui devra retarder l'autre message, lequel sera par exemple repris au point où il a été interrompu, ou encore entièrement recommencé, après que le premier message sera arrivé à son terme.

Ainsi, l'invention, sans faire appel à un moyen de gestion centralisée, permet de supprimer de manière efficace certains risques de destruction des messages.

De préférence, la durée du silence est calculée d'après une adresse de l'émetteur. Comme en principe chaque unité fonctionnelle émettrice a une adresse ou une composante d'adresse qui est unique dans un espace de communication déterminé, une durée calculée d'après cette composante d'adresse sera également unique et on est par conséquent certain que le retard de l'émission répétitive par rapport à la fin de l'émission initiale sera, pour chaque unité fonctionnelle émettrice, différent de celui introduit par toutes les autres unités fonctionnelles émettrices.

On peut également, cumulativement ou non avec ce qui précède, calculer certaines au moins des durées de silence d'après un rang de priorité du message, de façon que la durée d'interruption soit d'autant plus longue que le message est moins prioritaire.

Ainsi, lorsque plusieurs messages sont à transmettre au même moment, la transmission se produira en fait dans l'ordre de priorité.

A la suite d'un message appelant une réponse, il y a des chances pour que plusieurs messages de réponse commencent au même moment, après détection d'un temps de silence ayant une durée normalisée, et il y a donc un risque de collision systématique. Pour éviter cela, il est prévu selon l'invention que dans le cas des messages de réponse, un temps de silence préalable soit également calculé comme il a été dit précédemment de manière à être différent pour chaque unité fonctionnelle susceptible d'être émettrice. De la sorte, les messages de réponse sont transmis les uns après les autres en commençant par celui dont la durée du silence à détecter est la plus courte.

On peut encore redouter le risque de collision entre une émission répétitive et une émission initiale d'un autre message. Pour éviter cela, il est proposé selon l'invention de déterminer des premiers instants et des seconds instants séparés temporellement des premiers instants, et de faire sensiblement coïncider le lancement des émissions initiales avec les premiers instants et celui des émissions répétitives avec les seconds instants.

Selon un second aspect de l'invention, l'unité fonctionnelle reliable à un espace de communication pour y émettre des messages, est caractérisée en ce qu'elle est programmée et/ou munie d'au moins un circuit pour la mise en oeuvre du procédé selon le premier aspect.

Selon un troisième aspect de l'invention, l'installation comprenant des unités fonctionnelles reliées à un espace de communication librement accessible à certaines au moins des unités fonctionnelles pour l'émission et la réception de messages, est caractérisée en ce que les unités fonctionnelles susceptibles d'émettre des messages sont programmées pour émettre chaque message sous la forme d'une émission initiale suivie d'une émission répétitive après détection d'un silence dont la durée est différente pour chaque unité fonctionnelle émettrice.

D'autres particularités et avantages de l'invention ressortiront encore de la description ci-après, relative à des exemples non limitatifs.

Aux dessins annexés
- la figure 1 est une vue schématique d'une installation selon l'invention ;
- les figures 2 et 3 sont des schémas montrant divers messages dans le temps et leur position temporelle relative ;
- la figure 4 est un schéma comparatif de plusieurs messages, en vue partielle ; et
- la figure 5 est un schéma montrant l'échelonnement temporel de divers messages.

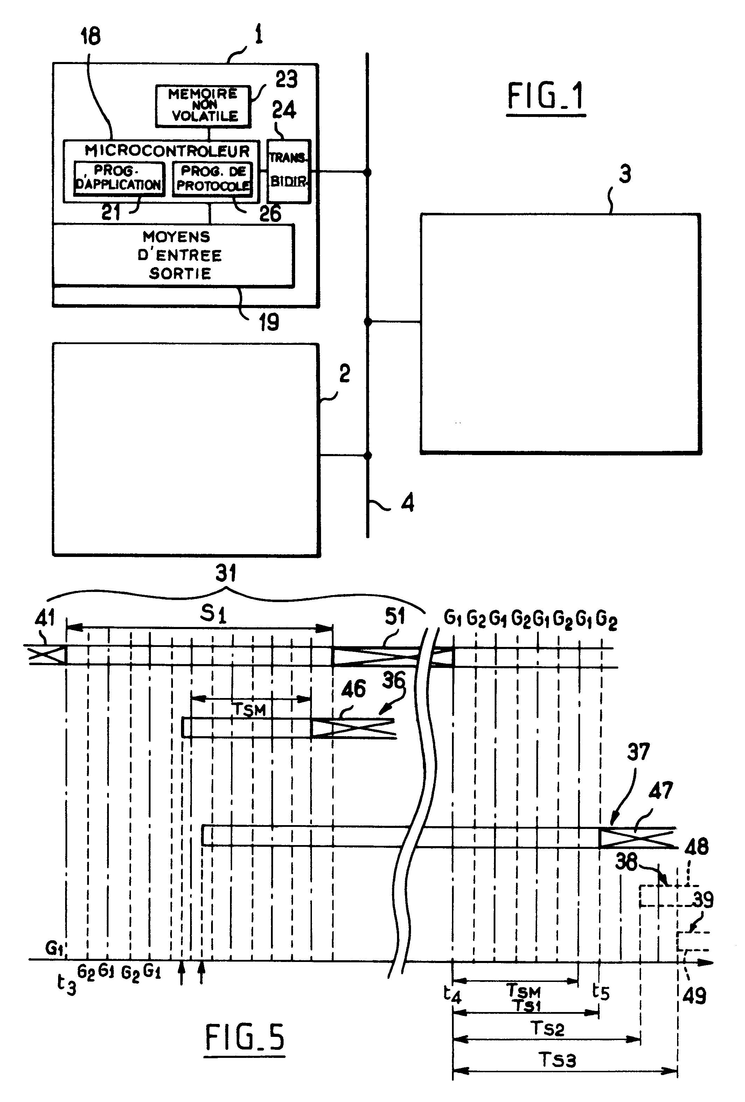

Dans l'exemple représenté à la figure 1, l'installation, volontairement simplifiée, comprend diverses unités fonctionnelles 1 à 3, qui peuvent être des appareils de commande tels que programmateurs, régulateurs de chauffage, ou des appareils d'action tels que des appareils d'éclairage, de chauffage ou électroménagers. Les unités fonctionnelles 1 à 3 sont reliées les unes aux autres par un espace de communication bidirectionnelle 4 à travers lequel elles peuvent échanger des messages tels que des messages d'état et des messages de commande.

L'espace 4 peut être constitué par le réseau d'alimentation électrique, auquel cas les messages sont élaborés de manière concrète selon la technique des courants porteurs. L'espace 4 peut également être constitué par un espace perméable aux ondes radio ou aux signaux infrarouges, ou par un moyen filaire.

Chaque unité fonctionnelle comporte un micro-contrôleur 18 relié à des moyens d'entrée/sortie 19 qui font l'interface avec l'utilisateur. En pratique, ces moyens d'entrée/sortie sont constitués par les boutons et voyants lumineux de l'appareil, et aussi, dans les unités d'action, par les actionneurs qui fournissent à l'utilisateur l'action attendue, par exemple éclairage, chauffage etc.

En fonction des commandes effectuées sur les boutons, et le cas échéant des signaux reçus de capteurs, un programme d'application 21 prévu dans le micro-contrôleur gère l'action des voyants lumineux et des actionneurs (lampes, moteurs, résistances chauffantes, relais etc) faisant partie des moyens d'entrée/sortie. Le micro-contrôleur 18 est en outre relié à une mémoire non-volatile 23. Le micro-contrôleur 18 est aussi relié à l'espace 4 par l'intermédiaire d'un moyen de transmission bidirectionnelle 24, par exemple un modem capable de transformer en message du type courants porteurs les informations reçues du micro-contrôleur 18, et inversement de transformer en signaux acceptables par le micro-contrôleur 18 les messages du type courants porteurs provenant de l'espace 4.

Il est aussi prévu dans le micro-contrôleur 18 un programme de protocole 26 qui gère les échanges d'informations entre le moyen de transmission bidirectionnelle, les moyens d'entrée/sortie et la mémoire non-volatile, et qui contribue à la qualité des messages émis à travers l'espace de communication bidirectionnelle 4. Les étapes du procédé que l'on va maintenant décrire sont mises en oeuvre par le programme de protocole 26.

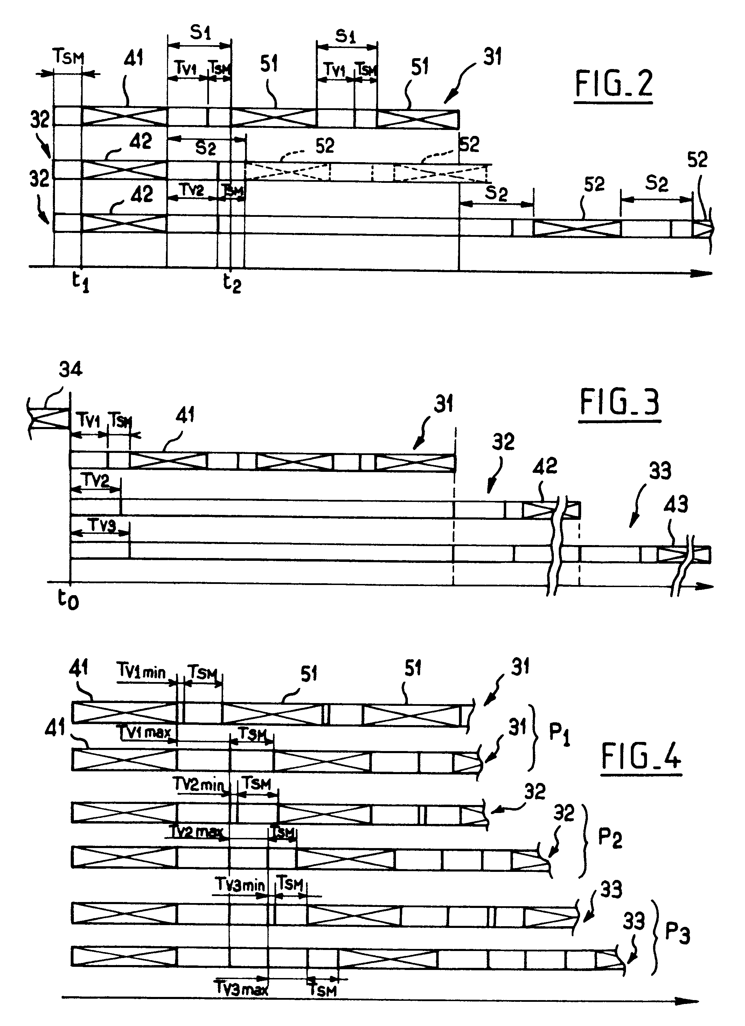

On a désigné par 31 à la figure 2 un message établi selon l'invention, comprenant trois émissions successives identiques, à savoir une émission initiale 41 et deux émissions répétitives 51. Chaque émission comprend, d'une manière qui n'est pas représentée, des composantes de signalisation de début et de fin de message, des composantes d'adresse pour indiquer la ou les unités fonctionnelles auxquelles le message est destiné, les données que le message a pour but de transmettre, etc. Dans les exemples représentés aux figures, les messages ont tous la même longueur pour chaque émission.

Avant l'émission initiale 41, l'unité fonctionnelle émettrice est silencieuse et "écoute" l'espace de communication. L'émission initiale 41 commence dès qu'un temps de silence minimal ininterrompu T_{SM} a été détecté.

De préférence, chaque unité fonctionnelle susceptible d'être émettrice écoute en permanence l'espace de communication et réactualise en permanence, dans sa mémoire, la durée écoulée depuis la fin de la plus récente activité sur la ligne. Si cette durée est égale ou supérieure à la durée de silence à respecter, il peut y avoir quasi-simultanéité, à l'instant t₁, entre la décision sur la nécessité de transmettre un message et le lancement de l'émission initiale 41.

Les émissions 41 et 51 sont séparées entre elles par deux interruptions, pendant lesquelles l'unité émettrice écoute l'espace de communication. L'émission répititive 51 commence dès qu'a été détecté un silence ininterrompu S₁ dont la durée est caractéristique de l'unité émettrice. Plus particulièrement, chaque silence S₁ a une durée égale au temps de silence minimal T_{SM}, auquel est ajouté un temps variable T_{V1} qui est par exemple proportionnel à une adresse numérique de l'unité fonctionnelle émettrice. Par adresse numérique, on entend un numéro d'adresse qui n'est affecté à aucune autre unité fonctionnelle de l'installation, ou en tout cas du réseau si l'installation est subdivisée en plusieurs réseaux fonctionnant indépendamment les uns des autres.

On a représenté également à la figure 2 un autre message 32 qui après le même temps d'écoute minimal T_{SM} que le message 31, a commencé son émission initiale 42 au même moment que l'émission initiale 41 du message 31. Dans ce message 32, les émissions initiale 42 et répétitives 52 sont nécessairement séparées par un silence ininterrompu S₂ dont la durée comprend le temps de silence minimal T_{SM} auquel s'ajoute un terme variable T_{V2} plus grand que le terme variable T_{V1} du signal 31. Ainsi, avant que le silence S₂ soit terminé, la première émission répétitive 51 du message 31 recommence à l'instant t₂ et cela est détecté par l'unité fonctionnelle cherchant à émettre le message 32, laquelle retarde automatiquement la transmission de son message en attendant de détecter un silence ininterrompu S₂. Ainsi, le message 32, au lieu d'avoir la forme représentée partiellement en pointillés à mi-hauteur de la figure 2, prend la forme étalée dans le temps représentée en bas de la figure 2, avec une interruption correspondant à la durée nécessaire pour terminer la transmission du message 31 augmentée du temps de silence S₂ après la fin de la transmission du message 31.

On a représenté à la figure 3 un message 34, appelant une réponse de la part de plusieurs unités fonctionnelles, et se terminant à l'instant t₀. Dans un tel cas, si toutes les unités fonctionnelles ayant un message de réponse 31, 32 ou 33 à transmettre en conséquence de la réception du message 34 commencent leur première émission 41, 42 ou 43 dès qu'un temps de silence minimal T_{SM} est détecté, les trois émissions 41, 42, 43 seront certainement simultanées. C'est pourquoi, selon l'invention, dans le cas de messages de réponse à un message reçu, on ajoute le terme variable T_{V1}, T_{V2}, T_{V3} à la durée minimale T_{SM} pour déterminer le silence devant être détecté avant de commencer l'émission initiale 41, 42 ou 43. Le silence initial a donc des durées différentes pour les différentes unités fonctionnelles susceptibles d'émettre. De cette façon, c'est l'unité fonctionnelle dont le terme variable est le plus court (T_{V1} dans l'exemple) qui peut émettre en premier, les deux autres détectant une activité sur l'espace de communication avant d'avoir détecté un silence initial suffisamment long pour pouvoir commencer à émettre. Ensuite, comme le montre la figure 3, les messages s'échelonnent dans le temps, par ordre de durée croissante des termes variables T_{V2}, T_{V3}.

Le schéma de la figure 3 pourrait également s'appliquer au cas où les messages 31, 32 et 33, au lieu d'être des messages de réponse au message 34, seraient des messages dont le lancement a été différé en raison de la transmission du message 34.

Lorsqu'un message tel que 31 est différé car l'espace de communication est occupé par un autre message tel que 34, il y a risque qu'au autre message tel que 32 ou 33 soit en attente pour la même raison. Par conséquent, si chaque message 31, 32 ou 33 ne respecte que le temps de silence minimal T_{SM} après la fin du message34, les messages 31 à 33 vont entrer en collision systématique lorsque le temps T_{SM} se sera écoulé après la fin du message 34. C'est pourquoi même dans le cas d'un message premier, on respecte la durée de silence spécifique S₁, S₂ etc avant le lancement de l'émission initiale si ce lancement a dû être différé en raison d'une activité sur l'espace de communication pendant l'écoute initiale sur une durée correspondant au temps de silence minimal.

Contrairement aux figures 2 et 3, la figure 4 est un schéma comparatif de différents messages possibles, et non pas un schéma de l'échelonnement temporel de ces différents messages en exploitation.

Pour éviter que, au hasard des numéros d'adresses des différentes unités fonctionnelles, des messages urgents ne soient fortement retardés par des messages beaucoup moins urgents émis par des unités fonctionnelles ayant un petit numéro d'adresse, il est prévu selon l'invention de définir trois rangs de priorité P₁, P₂, P₃.

Le rang P₁, le plus prioritaire, correspond aux messages qui sont la conséquence d'une action humaine. En effet, quand un opérateur humain actionne une commande, il souhaite que l'exécution de sa commande soit immédiate, ou en tout cas aussi rapide que possible. On attribue également le rang de priorité P1 aux messages d'alarme liés à la sécurité des personnes et des biens.

Le rang de priorité intermédiaire P₂ est celui des messages correspondant à des commandes automatiques, par exemple celles émises par un programmateur horaire ou par un régulateur.

Le troisième rang de priorité P₃ est celui des messages de gestion de réseau et d'optimisation, dont l'utilisateur ne perçoit pas directement les effets. On attribue également le rang de priorité P3 aux messages émis péridiquement par certains appareils, comme par exemple une sonde de température.

On a représenté à la figure 4 deux messages 31 correspondant à deux exemples extrêmes du rang de priorité P₁. Dans l'un des messages, le terme variable T_{V1} a une valeur minimale appelée T_{V1min}, tandis que dans l'autre le terme variable a une valeur maximale T_{V1max}.

En dessous sont représentés deux exemples extrêmes de massages 32 ayant le rang de priorité P₂, qui se distinguent en ce qu'ils ont respectivement un terme variable minimum T_{V2min} et maximum T_{V2max}. Pour être sûr que ces messages de priorité intermédiaire 32 seront toujours transmis après n'importe quel message 31 sensiblement simultané, on a ajouté aux temps de silence à respecter par les messages 32 un autre terme fixe qui est égal à T_{V1max}, c'est à dire au plus grand terme variable possible des messages de rang P₁. Ainsi, les durées de silence qui doivent être détectées avant chaque émission répétitive des messages de rang P₂ sont toutes plus longues que la plus longue durée de silence nécessaire avant chaque émission répétitive d'un message de rang P₁.

On procède de même pour les messages de rang P3 par rapport aux messages de rang P₂, en ajoutant aux termes variables T_{V3min} ou T_{V3max} des messages 33 deux termes fixes égaux l'un à T_{V1max} et l'autre à T_{V2max}, de façon que la durée de silence la plus courte possible pour les messages 33 de rang P₃ soit plus longue que la plus longue durée de silence possible pour un message 32 de rang P₂.

Pour éviter de pénaliser les petites installations avec des temps d'écoute allongés d'une manière correspondant à la capacité d'adressage maximale du système, on fait en sorte que les termes T_{V1max} et T_{V2max} soient une fonction croissante du nombre d'unités organisées en réseau pour communiquer entre-elles. Par exemple, les termes T_{V1max} et T_{V2max} que l'on ajoute aux temps de silence des rangs P₂ et P₃ sont choisis proportionnels au nombre d'adresses effectivement attribuées dans l'installation, et non pas au nombre maximal d'adresses que le système pourrait gérer.

Les enseignements décrits en référence aux figures 3 et 4 peuvent se combiner. Il y a alors deux types de message dans chaque rang de priorité : d'une part les messages dits "premiers" (par opposition aux messages de réponse) ayant pu être transmis dès qu'un temps de silence minimal T_{SM} a été détecté ; et d'autre part les messages de réponse ainsi que les messages premiers ayant dû attendre que l'espace se libère, qui doivent détecter un silence de durée spécifique avant de pouvoir commencer à être transmis.

On peut encore raffiner le procédé de la façon suivante : d'après le contenu de l'adresse de destinataire contenue dans le message 34, le destinataire du message peut savoir s'il est ou non le seul destinataire. Si oui, il peut transmettre le message de réponse comme s'il s'agissait d'un message premier, c'est à dire dès détection d'un temps de silence minimal T_{SM}.

On comprend d'après la figure 5 qu'il y a a priori un risque que le silence S1 nécessaire pour la poursuite d'un message 31 et un silence T_{SM} détecté à partir d'un instant quelconque où une décision d'émission a été prise par un autre émetteur se terminent au même instant. Si cela se produisait, une émission initiale telle que 46 d'un autre message 36 interférerait avec l'émission répétitive 51 du message 31.

Pour éviter cela, chaque début de silence (instant t₃ et t₄) sur l'espace de communication sert de point de départ à deux grilles de temps ayant un pas identique et qui sont décalées d'un demi-pas l'une par rapport à l'autre.

Une première de ces grilles est représentée par des traits mixtes aux instants G1, et la seconde grille par des pointillés aux instants G2.

Chaque unité fonctionnelle susceptible d'être émettrice détecte les instants t₃ et t₄ et détermine d'après cette détection les instants G1 ou G2. Les unités fonctionnelles qui ne sont pas en cours de transmission de message ni en train d'attendre que l'espace de communication se libère peuvent ne s'intéresser qu'aux instants G1 car, selon l'invention, le début non différé des émissions initiales (telles que 46) doit coïncider avec un instant G1 de la première grille. Au contraire, le début des émissions répétitives telles que 51 doit coïncider avec un instant G2 de la seconde grille. On verra plus loin que c'est également le cas des émissions initiales telles que 47 ayant dû être retardées. Par conséquent, une unité en cours de transmission de message ou attendant que l'espace de communication se libère peut ne s'intéresser qu'aux instants G2. En pratique, la prise en compte de la seconde grille consiste en ce que les durées de silence à respecter à partir de la libération de l'espace soient calculées pour que la fin de ces silences coïncide systématiquement avec des instants G2 de la seconde grille.

Ainsi, il est impossible que le début d'une émission initiale coïncide avec le début d'une émission répétitive. Ou bien le début de l'émission initiale (émission 46) précède le début de l'émission répétitive et (de manière non représentée), l'émission répétitive 51 est différée jusqu'après la fin de l'émission initiale 46 ou même puisqu'après la fin du message 36 si la durée de silence associée au message 36 est plus brève que le silence S1. Ou bien le silence T_{SM} à respecter avant le début de l'émission initiale (émission 47) n'est pas terminé lors du début de l'émission répétitive 51 et dans ce cas, comme représenté, l'émission initiale 47 est reportée au moins jusqu'après la fin de l'émission répétitive 51.

Pour éviter que la première émission 47 du message 37 entre en collision avec un autre message cherchant à être émis pour la première fois après la fin du message 31, on fait coïncider le lancement de la première émission 47 avec un instant t₅ de la seconde grille.

D'après l'exemple des figures 3 et 4, l'émission initiale 47 devrait être précédée d'un silence de durée T_{SM} augmentée d'un terme variable tenant compte du rang de priorité du message 37. Ceci offre une grande sécurité de transmission pour la première émission du message, mais permet à un message premier de s'intercaler entre le message 31 et le message 37. Ceci peut être gênant si le message qui s'intercale a un rang de priorité P₃ alors que le message 37 a par exemple un rang de priorité P₁. C'est pourquoi dans l'exemple de la figure 5, on lance le message 37 à l'occasion du premier instant G₂ qui suit le temps de silence minimal T_{SM}. Le temps de silence total ainsi respecté est appelé T_{S1}, et correspond au rang de priorité P₁. Pour limiter le risque de collisions avec d'autres messages qui attendraient aussi la fin du message 31, on prévoit que le temps de silence T_{S2} ou T_{S3} à respecter dans ce cas par la première émission 48 ou 49 d'un message 38 ou 39 de rang P₂ ou P₃ est plus long d'un ou respectivement deux pas de grille que le temps T_{S1}. Ainsi, on ne risque plus les collisions qu'entre messages en attente ayant même rang de priorité tout en optimisant, pour le cas sans collision, la célérité de transmission. Pour éviter tout risque qu'un message faiblement prioritaire s'intercale par hasard entre les émissions 51 et 37, on peut augmenter d'un ou deux pas de grille le temps de silence minimal T_{SM} pour les messages de rang P₂ ou respectivement P₃.

Dans le cas d'un message premier, l'instant de début de silence minimal T_{SM} est aléatoire alors que l'instant de sa fin doit coïncider avec la première grille. Ceci produit une légère fluctuation de la durée T_{SM}, ce qui est sans gravité.

En pratique, il faut que le demi-pas de la grille soit juste suffisant pour tenir compte des tolérances liées notamment au temps de réponse des différentes unités par rapport à l'évènement générateur des grilles, à savoir le début d'un silence dans l'espace de communication.

De manière non représentée à la figure 5, on fait coïncider le lancement des émissions initiales des messages de réponse, tels que 31, 32 et 33 à la figure 3, avec la seconde grille G2 de façon à éviter les collisions avec des messages premiers cherchant pour la première fois à être émis pendant le silence S1 qui suit le message 34.

Bien entendu, l'invention n'est pas limitée aux exemples décrits et représentés.

Au lieu de calculer la durée de silence d'après l'adresse, on pourrait affecter à chaque unité fonctionnelle un rang de priorité bien précis par rapport à toutes les autres.

L'adresse à partir de laquelle on détermine les durées de silence spécifiques peut être constituée par tout élément d'information qui, dans le réseau d'unités, soit associé de manière unique à l'unité émettrice concernée.

L'invention est également applicable aux installations dans lesquelles la durée des messages est quelconque. Si deux messages qui ont commencé en même temps ont des durées différentes, le premier qui s'arrête ne pourra pas recommencer à émettre puisqu'il détectera l'occupation de l'espace de communication pendant la fin de l'autre message. Mais quand l'autre message se termine, si le temps de silence est identique pour les deux messages, les deux messages vont de nouveaux commencer une émission ensemble lorsque le temps de silence minimum sera écoulé après la fin du message le plus long. Grâce à l'invention ceci ne peut plus se produire, l'unité fonctionnelle respectant le temps de silence le plus bref recommençant à émettre avant que le temps de silence à respecter par l'autre unité soit terminé.

Comme l'invention procure une quasi-certitude que chaque message sera reçu au plus tard à l'occasion de la première émission répétitive, on pourrait envisager de donner systématiquement un rang de très faible priorité à la deuxième émission répétitive.

## Revendications

1. Procédé pour transmettre des messages à travers un espace de communication (4) librement accessible à divers émetteurs (1, 2, 3) dans lequel chaque message comprend une émission initiale (41, 42) suivie, après une interruption (51, 52) par au moins une émission répétitive (51, 52) caractérisé en ce que pendant l'interruption on écoute l'espace de communication (4), en ce qu'on transmet l'émission répétitive (51, 52) si on détecte sur l'espace de communication un temps de silence (S1, S2) dont la durée est déterminée en fonction de l'émetteur de l'émission initiale, et en ce qu'on retarde l'émission répétitive si une transmission en provenance d'un autre émetteur est détectée.

2. Procédé selon la revendication 1, caractérisé en ce que dans le cas d'un message de réponse (figure 3), on écoute l'espace de communication et on ne lance l'émission initiale (41, 42, 43), qu'après détection d'un temps de silence dont la durée est déterminée en fonction de l'émetteur.

3. Procédé selon la revendication 1 ou 2, caractérisé en ce que dans le cas d'un message premier, on écoute l'espace de communication et on ne lance l'émission initiale, qu'après détection d'un temps de silence ayant une durée minimale (T_{SM}).

4. Procédé selon la revendication 1 ou 2, caractérisé en ce que chaque unité fonctionnelle susceptible d'être émettrice écoute en permanence l'espace de communication (4) et réactualise en permanence la durée de silence depuis la plus récente activité détectée, et lance l'émission initiale d'un message dès la décision de transmettre ce message si la durée de silence réactualisée est au moins égale à une durée de silence à respecter avant l'émission initiale.

5. Procédé selon la revendication 1 ou 2, caractérisé en ce que dans le cas d'un message premier on écoute l'espace de communication, on lance l'émission initiale en l'absence d'activité sur l'espace de communication pendant une durée minimale prédéterminée (T_{SM}) à partir d'un instant non postérieur à la décision de transmettre le message, et en cas d'activité détectée pendant l'écoute, on retarde le lancement de l'émission initiale jusqu'à détection d'un temps de silence dont la durée est spécifique (S₂, T_{S1}, T_{S2}, T_{S3}).

6. Procédé selon l'une des revendications 1 à 5, caractérisé en ce qu'on définit des premiers instants (G1) et des seconds instants (G2) séparés temporellement des premiers instants, on fait sensiblement coïncider le lancement de certaines au moins des émissions initiales (42, 43) avec les premiers instants (G1), et on fait sensiblement coincider le lancement de certaines au moins des émissions répétitives (51) avec les seconds instants (G2).

7. Procédé selon la revendication 3 ou 5, caractérisé en ce qu'on définit des premiers instants (G1) et des seconds instants (G2) séparés temporellement des premiers instants, on fait sensiblement coïncider le lancement de certaines au moins des émissions initiales (42, 43) avec les premiers instants (G1), et on fait sensiblement coïncider avec les seconds instants (G2) le lancement de certaines au moins des émissions répétitives (51) ainsi que le lancement des émissions initiales qui a été différé en raison d'une activité sur l'espace de communication pendant le temps d'écoute.

8. Procédé selon la revendication 6 ou 7, caractérisé en ce qu'on fait coïncider avec les seconds instants le lancement des émissions initiales de messages de réponse.

9. Procédé selon l'une des revendications 6 à 8, caractérisé en ce que chaque émetteur détermine les premiers et les seconds instants en se synchronisant sur des évènements perceptibles (t₃, t₄) affectant l'espace de communication (4).

10. Procédé selon la revendication 9, caractérisé en ce que les évènements perceptibles sont constitués par les débuts de silence (t₃, t₄).

11. Procédé selon l'une des revendications 6 à 10, caractérisé en ce que les premiers instants (G1) appartiennent à une grille temporelle à pas constant, décalée dans le temps par rapport à une grille temporelle de même pas à laquelle appartiennent les seconds instants (G2).

12. Procédé selon l'une des revendications 1 à 11, caractérisé en ce que pour déterminer une durée de silence en fonction de l'émetteur, on calcule la durée de silence (S1, S2) d'après une adresse de l'émetteur.

13. Procédé selon l'une des revendications 1 à 12, caractérisé en ce qu'on calcule certaines au moins des durées de silence d'après un rang de priorité (P₁, P₂, P₃) du message, de façon que la durée de silence soit d'autant plus longue que le message est moins prioritaire.

14. Procédé selon la revendication 13, caractérisé en ce que pour un message ayant un rang de priorité n + 1 on calcule la durée de silence de manière qu'elle soit supérieure à toute durée de silence calculable pour un message ayant un rang de priorité n.

15. Procédé selon la revendication 14, caractérisé en ce que pour calculer la durée de silence à respecter par un message ayant un rang de priorité n + 1, on ajoute à la durée de silence des messages de rang de priorité n un terme (T_{V1max}, T_{V2max}) qui est fonction croissante du nombre d'unités fonctionnelles organisées en réseau.

16. Procédé selon l'une des revendications 13 à 15, caractérisé en ce qu'on classe prioritaires des messages faisant suite à une intervention humaine.

17. Procédé selon l'une des revendications 13 à 16, caractérisé en ce qu'on accorde à des messages de commande automatique une priorité (P₂) par rapport à des messages (33) de gestion de réseau et d'optimisation.

18. Procédé selon l'une des revendications 1 à 17, caractérisé en ce que les émissions (41, 51, 42, 52) de tous les messages ont des durées identiques.

19. Unité fonctionnelle reliable à un espace de communication (4) pour y émettre des messages, caractérisée en ce qu'elle est programmée et/ou munie d'au moins un circuit pour la mise en oeuvre d'un procédé selon l'une des revendications 1 à 18.

20. Installation comprenant des unités fonctionnelles (1, 2, 3) reliées à un espace de communication (4) librement accessible à certaines au moins des unités fonctionnelles pour l'émission et la réception de messages (31, 32, 33), caractérisée en ce que les unités fonctionnelles susceptibles d'émettre des messages sont programmées et/ou munies de circuits pour émettre chaque message sous la forme d'une émission initiale (41, 42) suivie d'une émission répétitive (51, 52) après détection d'un silence (S1, S2) dont la durée est différente pour chaque unité fonctionnelle émettrice.
